# EUROPÄISCHE PATENTSCHRIFT

(11) **EP 0 835 066 B1**
(45) Veröffentlichungstag und Bekanntmachung des Hinweises auf die Patenterteilung: **29.09.1999**
(21) Anmeldenummer: 96920753.9
(22) Anmeldetag: 30.05.1996
(51) Int. Cl.: A23P 1/14, A23L 1/18

(54) **VERFAHREN UND VORRICHTUNG ZUM PUFFEN VON NAHRUNGSMITTELN**
PROCESS AND DEVICE FOR POPPING FOODSTUFFS
PROCEDE ET DISPOSITIF POUR L'ECLATEMENT DE DENREES ALIMENTAIRES

(30) Priorität: 10.06.1995 DE 19521243; 10.06.1995 DE 19521168
(43) Veröffentlichungstag der Anmeldung: 15.04.1998
(73) Patentinhaber: Bichsel, Rudolf, 68500 Guebwiller (FR)
(72) Erfinder: Bichsel, Rudolf, 68500 Guebwiller (FR)
(74) Vertreter: Weller, Wolfgang, Dr.rer.nat.
(86) Internationale Anmeldenummer: EP9602327
(87) Internationale Veröffentlichungsnummer: WO9641545

(56) Entgegenhaltungen:
- EP-A- 0 437 295
- US-A- 2 026 734
- US-A- 4 878 422

## Beschreibung

Die Erfindung betrifft ein Verfahren zum Puffen von Nahrungsmitteln, insbesondere von Getreide und Hülsenfrüchten, bei dem das Nahrungsmittel als körniges Produkt aufbereitet wird, das Produkt in ein geschlossenes, stehendes Behältnis gegeben wird, im geschlossenen Behältnis derart mit einem unter Druck stehenden, wärmeführenden Medium beaufschlagt wird, daß bei einem anschließenden Öffnen des Behältnisses ein solcher schlagartiger Druckabbau unter Austreten des Produktes aus dem Behältnis stattfindet, daß das Produkt aufgebläht wird, wobei nach einer gewissen Einströmzeit des Mediums in das Behältnis und kurz vor Öffnen des Behältnisses noch mit einem zusätzlichen, höheren Druck beaufschlagt wird.

Die Erfindung betrifft ferner eine Vorrichtung zum Puffen von Nahrungsmitteln, insbesondere von Getreide und Hülsenfrüchten, mit einem stehenden Puffing-Reaktor, der ein verschließbares Behältnis aufweist, in das das Nahrungsmittel als körniges Produkt einbringbar ist, sowie mit einer Zuführleitung zum Zuführen eines unter Druck stehenden, wärmeführenden Mediums in das Behältnis, sowie mit einem Öffnungsmechanismus zum schlagartigen Öffnen des Behältnisses.

Ein derartiges Verfahren und eine derartige Vorrichtung sind aus der US-A-4 878 422 bekannt.

Unter Puffen versteht man ein Aufschlußverfahren für Getreide und Hülsenfrüchte, die unter Überdruck gedämpft und nach Aufheben des Druckes zu lockeren Massen aufgebläht werden. Die Produkte kommen z.B. als Puffweizen, Puffreis, Puffmais, gepuffte Erbsen usw. in den Handel.

In den dreißiger Jahren dieses Jahrhunderts waren die Anlagen so ausgebildet, daß das Produkt durch eine Mulde einem liegenden Zylinder zugeführt wird, den man dann durch eine besondere Vorrichtung verschließt. Der Zylinder wird in rotierende Bewegung versetzt und durch Gasflammen solange beheizt, bis der innere Druck eine bestimmte Höhe erreicht hat. Dann wird Dampf in den Zylinder eingelassen, bis der Dampfdruck auf einen bestimmten Wert gestiegen ist. Anschließend wird die Dampfzufuhr wieder abgestellt und die Erwärmung durch die Gasflammen fortgesetzt, bis im Innern des Zylinders ein Druck von etwa 12 bar vorherrscht. Nun erfolgt eine plötzliche Entlastung des inneren Druckes durch Aufschlagen bzw. Öffnen der dafür besonders konstruierten Tür des Zylinders. Das Produkt schießt aus dem Zylinder heraus, und in diesem Moment erfolgt das Dehnen des Produktes und die Vergrößerung des Volumens zu dem sogenannten Puffprodukt. Der Kern ist durch die Dampfeinwirkung an sich bereits weich geworden und steht auch im Innern unter dem hohen Dampfdruck von 12 bar. In dem Moment der Entleerung ist der äußere Druck plötzlich verschwunden und durch den dann noch im Innern des Kornes herrschenden hohen Druck wird das Gefüge des Kornes gepufft, d.h. es erhält das etwa Acht- bis Zehnfache seiner ursprünglichen Größe. Das Öffnen des Zylinders ist mit einer geschützartigen Detonation verbunden, wobei auch entsprechende Rückstoßkräfte freiwerden. Die Klappe oder der Verschluß des Zylinders ist eine stirnseitige Endklappe des liegenden Zylinders, die sehr hohen Belastungen ausgesetzt ist. Oftmals wurde die Klappe samt dem Befestigungsmechanismus am Zylinder abgerissen.

Weiterentwicklungen führten dann dazu, bodenseitige Austragsöffnungen vorzusehen.

Bei der EP-B-0 061 229 ist nunmehr ein stehendes, etwa zylindrisches Behältnis vorgesehen, das von oben her mit dem Produkt befüllt und anschließend verschlossen wird. Im unteren Endbereich, in dem sich auch das Austragsende befindet, wird über eine einzige Leitung ein unter Druck stehendes wärmeführendes Medium in das Behältnis eingeführt. Das eingeführte, unter Druck stehende wärmeführende Medium, meist heißer, unter Druck stehender Wasserdampf, durchströmt das im Behältnis enthaltene Produkt bzw. Gut und erwärmt es dabei auf die gewünschte Temperatur. In der EP-B-0 061 229 wird auf Temperaturen im Bereich zwischen 200° und 300°C erwärmt, dabei wird ein Druck von mindestens 5 bar aufgebaut. Am unteren Ende des Behältnisses ist eine etwa um 90° abgebogene Austragsleitung vorgesehen, die in einer Expansionskammer mündet. Bei den gewählten Bedingungen wird die im Innern des Produktes enthaltene Feuchtigkeit, die von dem Produkt selbst herstammt oder durch entsprechende Vorbehandlungen dem Produkt verliehen wurde, ebenfalls erwärmt, jedoch ohne daß diese verdampft. Nach Öffnen eines Öffnungsmechanismus schießt das Produkt aus dem Behältnis durch die Abführleitung hindurch und expandiert in der Expansionskammer, d.h. die im Produkt enthaltene Feuchtigkeit kann durch den schlagartigen Druckabbau entsprechend schlagartig verdampfen, wobei das Produkt aufgebläht wird.

Das in der EP-B-0 061 229 beschriebene Verfahren sowie die darin beschriebene Vorrichtung weisen nun zahlreiche Nachteile auf.

Das in das Behältnis eingeführte Medium ist mit 200° bis 300°C so heiß, daß die Gefahr von Beschädigungen oder Verbrennungen am Produkt besteht.

Ferner ist es sehr energieaufwendig, Wasserdampf auf solch hohe Temperaturen zu erwärmen.

Im unteren Drittel des gefüllten Reaktors finden starke Auskondensationen statt, wodurch das Gut übermäßig naß wird und beim späteren Expansionsvorgang ein schlechtes Eregbnis bringt. Im oberen Drittel wird das Gut unzureichend erwärmt und befeuchtet, was ebenfalls ein schlechtes Puffing-Erzeugnis ergibt.

Aus der EP-A-0 437 295 ist ein Reaktor bekannt, in dessen Innenraum ein durchgehend perforiertes Behältnis aufgenommen ist. Das Medium (z.B. Wasserdampf) kann von der Außenseite her über die Perforationen in das im Behältnis aufgenommene Gut strömen und dieses erwärmen.

Bei der eingangs erwähnten US-A-4 878 422 sind eine bzw. zwei Dampfeinlaßleitungen vorgesehen, die den Dampf tangential oder vorteilhaft etwas nach unten gerichtet in die Kammer einführen, in der das behandelte Gut aufgenommen ist. Aus ein und derselben Leitung wird kurz vor dem Öffnen des Behältnisses, also kurz vor dem Puffing-Schuß, kurzzeitig ein Dampfstrahlstoß eingeführt. Dieser Dampfstrahlstoß, der in das Material hineingerichtet ist sorgt dafür, daß im Material und auch in der Druckkammer ein höherer Druck aufgebaut wird. Dadurch soll ein beobachtetes Austreibdruckdifferenzial beim Öffnen des Ventils ausgeglichen werden.

Aus der US-A-2 026 734 ist ein elektrisch beheizter Puffing-Reaktor bekannt, bei dem während des Öffnens und während des Austreibens des Produktes aus einem Druckreservat Druck nachgeführt wird, so daß während des gesamten Austreibvorganges in der Kammer möglichst ein konstanter Druck aufrechterhalten bleibt.

Es ist Aufgabe der vorliegenden Erfindung, ein Verfahren und eine Vorrichtung der eingangs genannten Art dahingehend zu verbessern, daß es ermöglicht wird, das Produkt mit relativ niedrigen Temperaturen zu behandeln, dennoch einen Austreibdruck zur Verfügung zu haben, der an sich höhere Temperaturen verlangen würde.

Erfindungsgemäß wird die Aufgabe bei einem Verfahren dadurch gelöst, daß das Produkt in ein umfänglich mit zahlreichen Öffnungen versehenes Behältnis eingebracht wird, das ferner das Medium über die Außenseite verteilt an das Behältnis herangeführt und über die zahlreichen Öffnungen in das Produkt hinein und durch dieses gleichmäßig verteilt geführt wird, und daß ein produktfreier Bereich im Behältnis, in Austragrichtung des Produktes gesehen, hinter dem Produkt, mit dem höheren Druck beaufschlagt wird.

Bei einer Vorrichtung wird die Aufgabe dadurch gelöst, daß das Behältnis umfänglich verteilt mit zahlreichen Öffnungen versehen ist, das um die Außenseite des Behältnisses eine Kammer vorgesehen ist, der das Medium zugeführt wird und dieses aus der Kammer über die zahlreichen Öffnungen in das Behältnis strömt, und wobei das Behältnis am oberen Endbereich keine Öffnungen aufweist, und das in einem oberen Endbereich des Behältnisses eine Zuführleitung mündet, über die ein Medium höheren Druckes als der des zugeführten Mediums einspeisbar ist.

Diese Maßnahmen haben den beachtlichen Vorteil, daß kurz vor dem Öffnen in dem Bereich hinter dem Produkt kurzfristig ein noch höherer Druck aufgebaut wird, somit ein druckverstärkter "Treibsatz" ausgebildet wird. Der erhöhte Druck in dem Raum "hinter" dem Produkt wird sich auch teilweise in das Gut hinein fortsetzen, da dieser zusätzliche Druckaufbau aber nur kurz vor dem Öffnen bewerkstelligt wird, ist dieser Druckausgleich beim Öffnen noch nicht weit fortgeschritten. Dies eröffnet nun auch die Möglichkeit, diesen zusätzlichen Druckaufbau, falls das Druckmedium wasserdampfführend ist, durch ein weiter aufgeheiztes dampfführendes Medium zu bewerkstelligen, das durchaus auch für das Produkt kritische Temperaturen aufweisen kann. Dieses Medium höheren Drucks und ggf. auch höherer Temperatur tritt im wesentlichen nur mit der am oberen Ende des stehenden Behältnisses vorhandenen Produktschicht in Berührung, die nur für einen kurzen Zeitraum währt, so daß keine beachtliche Beeinträchtigungsgefahr des Gutes besteht. Durch den "Treibsatz" wird das Produkt rasch, gleichmäßig und vollständig aus dem Reaktor ausgetrieben. Die Temperaturen im Produkt können auf einem gewünschten, relativ niedrigen Niveau gehalten werden.

Durch das Vorsehen der zahlreichen, über den Umfang des Behältnisses verteilten Eintrittsöffnungen für das heiße Medium kann dieses über diese zahlreichen Öffnungen gleichmäßig verteilt von der Außenseite her in das im Behältnis aufgenommene Produkt an vielen Stellen eindringen, so daß zahlreiche Wärmeaustauschstellen gebildet sind. Ausgehend von den zahlreichen Öffnungen bilden sich unzählige kleine Strömungskanäle, so daß die direkte Wärmeaustauschfläche zwischen dem durch die zahlreichen Öffnungen einströmenden Medium und den Produktkörnern um ein Mehrfaches gegenüber der eingangs erwähnten einzigen Eintragsleitung vervielfacht ist.

Durch diese Maßnahme kann in einem wesentlich kürzeren Zeitraum und insbesondere viel gleichmäßiger verteilt, Wärme auf das Produkt übertragen werden und zugleich ein Druckaufbau im Behältnis bewerkstelligt werden. Dementsprechend muß auch der Temperaturgradient zwischen dem einströmenden Medium und dem Korn nicht mehr unnötig groß sein, so daß die Gefahr von Auskondensierungen schon beachtlich herabgesetzt werden kann. Dieses wesentlich raschere und gleichmäßigere Verteilen der Wärme führt neben einer Energieeinsparung auch zu einer Zeiteinsparung, d.h. es können mit einer solchen Vorrichtung mehr Puffing-Schüsse pro Zeiteinheit durchgeführt werden. Aufgrund der homogenen Wärmeverteilung in der Expansionskammer wird ein relativ gleichmäßig aufgeblähtes Produkt erhalten, d.h. die Bandbreite der Produktstreuung ist wesentlich schmäler, insbesondere werden die unerwünschten Extreme, nicht geblähtes Produkt einerseits und so stark geblähtes Produkt, daß es zerreißt oder zerkrümelt, andererseits, im wesentlichen unterdrückt. Aufgrund der Tatsache, daß, um eine bestimmte gewünschte Produkttemperatur zu erzielen, nicht mehr ein Medium eingeführt werden muß, das weit über dieser Temperatur erwärmt ist, kann das Produkt wesentlich schonender, ohne die Gefahr von Verbrennungen, erwärmt werden.

Dadurch, daß das Behältnis an einem oberen Endbereich keine Öffnungen aufweist, baut sich bereits in dieser Betriebsphase "hinter" dem Produkt ein produktfreies Mediumpolster auf, das somit als eine Art "Basis-Treibladung" arbeitet. Dieser Bereich der "Basis-Treibladung" wird dann kurz vor dem Öffnen des Reaktors noch mit dem Medium höheren Druckes p₂ beaufschlagt, und es bildet sich dann der "Treibsatz", der das Produkt beim Öffnen des Reaktors vor sich herschiebt.

In einer weiteren Ausgestaltung der Erfindung wird auch die Außenseite des Behältnisses mit dem höheren Druck beaufschlagt.

Bei der Vorrichtung wird dies dadurch gelöst, daß die Zuführleitung für das Medium höheren Drucks über ein Ventil mit der Kammer verbunden ist.

Diese Maßnahme hat nun den erheblichen Vorteil, daß nicht nur in dem Bereich "hinter" dem Produkt im Innern des Behältnisses der höhere "Treibsatz"-Druck geschaffen wird, sondern daß auch dieser hohe Druck um das Behältnis herum in der Kammer aufgebaut wird. Somit besteht ein Druckgefälle zwischen der Kammer, die das Behältnis umgibt und dem Bereich im Innern des Behältnisses, in dem die Öffnungen vorhanden sind und in dem auch das Produkt aufgenommen ist. Beim Öffnen des Behältnisses wird nun das Medium mit höherem Druck von der Außenseite des Behältnisses aus der Kammer über die Öffnungen in den sich entleerenden Innenraum des Behältnisses hineingedruckt. Dadurch wird zum einem ausgeschlossen, daß Produktteile oder Produktstaub aus den Öffnungen beim Entleeren herausgedrückt werden. Zum anderen kann ein Luftkissen an der Innenwand des Behältnisses erzielt werden, wodurch das Produkt relativ reibungsarm entlang der Innenseite des Behältnisses ausströmt. Dadurch kann das Produkt relativ schonend aus dem Behältnis ausgetrieben werden.

In einer weiteren Ausgestaltung der Erfindung sind die Öffnungen als nach außen gerichtete Stanzlöcher ausgebildet oder als Ringkanäle ausgebildet, die zwischen aufeinandersitzenden Ringelementen ausgebildet sind, und insbesondere sind die Öffnungen nach unten in Austragsrichtung geneigt ausgerichtet.

Durch diese Maßnahmen wird der "Luftkisseneffekt" beim Austragen des Gutes noch verstärkt.

In einer weiteren Ausgestaltung der Erfindung wird das Behältnis von der Außenseite her beheizt.

Bei der Vorrichtung ist entsprechend dieser Maßnahme die Außenseite der Kammer mit einer Heizung versehen, die insbesondere als Heizkammer ausgebildet sein kann, die um die Kammer herum angeordnet ist, und wobei die Heizkammer von einem Heizmedium durchströmbar ist.

Diese Maßnahme hat nun den Vorteil, daß Auskondensationen der strömenden wärmeübertragenden Medien beim Anlaufen und beim Durchführen des Verfahrens weitgehend verhindert werden können.

Es versteht sich, daß die vorstehend genannten und die nachstehend noch zu erläuternden Maßnahmen nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
- Fig. 1: stark schematisiert eine Seitenansicht einer Vorrichtung zum Puffen,
- Fig. 2: gegenüber der Darstellung von Fig. 1 in stark vergrößertem Maßstab, teilweise schematisiert, einen Längsschnitt eines Puffing-Reaktors der Vorrichtung,
- Fig. 3: einen weiter stark vergrößerten Ausschnitt des Bereiches wie er in Fig. 2 rechteckig umgrenzt ist,
und
- Fig. 4: einen noch etwas stärker vergrößerten, der Fig. 3 entsprechenden Ausschnitt eines weiteren Ausführungsbeispieles.

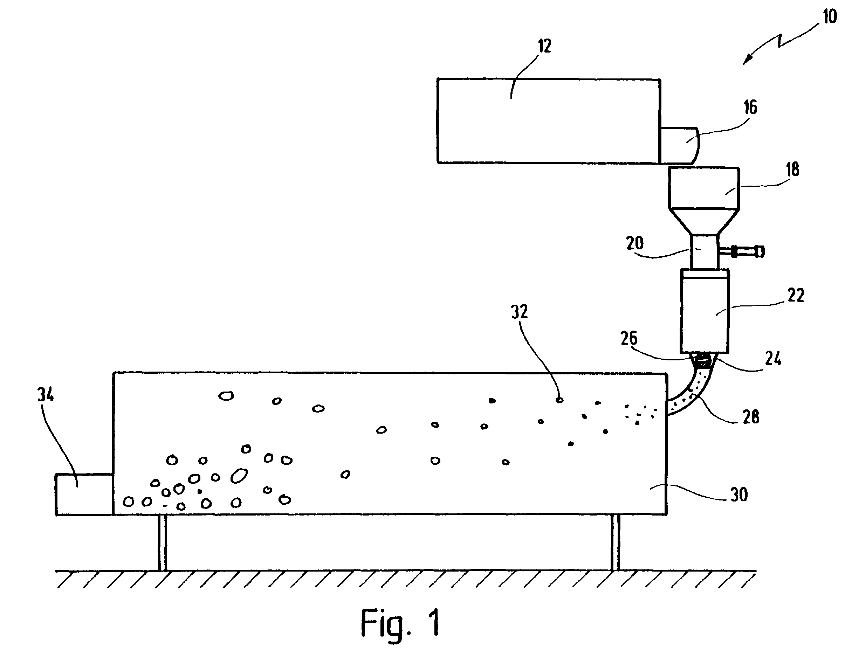

In Fig. 1 ist stark schematisiert eine Vorrichtung zum Puffen von Nahrungsmitteln allgemein mit der Bezugsziffer 10 versehen.

Die Vorrichtung 10 weist eine etwa horizontal ausgerichtete Heizkammer 12 auf.

In der Heizkammer 12 wird das zu puffende Gut als aufbereitetes körniges Produkt eingegeben und vorgewärmt. Die Vorwärmtemperatur liegt dabei unter 100°C, so daß die im Produkt vorhandene Feuchtigkeit nicht ausdampft.

Über einen Austrag 16 kann das vorgewärmte Produkt in einen Vorratsbehälter 18 überbracht werden. Der Vorratsbehälter 18 ist äußerlich mit einem Wärmeisoliermantel versehen, um das vorgewärmte Produkt auf dieser Vorwärmtemperatur zu halten.

Am unteren Ende des Vorratsbehälter 18 ist eine Dosierschleuse 20 vorgesehen, die wiederum am oberen Ende eines Puffing-Reaktors 22 angeordnet ist.

Über die Dosierschleuse 20 kann die entsprechende Menge an zu puffendem Produkt in den Puffing-Reaktor 22 eingegeben werden, und anschließend wird das obere Ende des Puffing-Reaktors verschlossen.

Am unteren Ende des Puffing-Reaktors 22 ist ein Öffnungsmechanismus 24 vorgesehen, der im dargestellten Ausführungsbeispiel ein Kugelventil 26 enthält.

Der Öffnungsmechanismus 24 ist über eine gekrümmte Leitung 28 mit einer Expansionskammer 30 verbunden, in die das Produkt etwa horizontal ausgerichtet beim Öffnen des Öffnungsmechanismus 24 eingeschossen wird. Im Laufe des Fluges expandiert das Produkt 32, d.h. nach Verlassen der Leitung 28 verdampft die im Innern des Produktes vorhandene Flüssigkeit schlagartig, bläht dabei das Produkt auf, so daß dann das gewünschte aufgeblähte oder Puff-Produkt erhalten wird. Über einen Austrag 34 kann das geblähte Puff-Produkt aus der Expansionskammer 30 abgeführt werden.

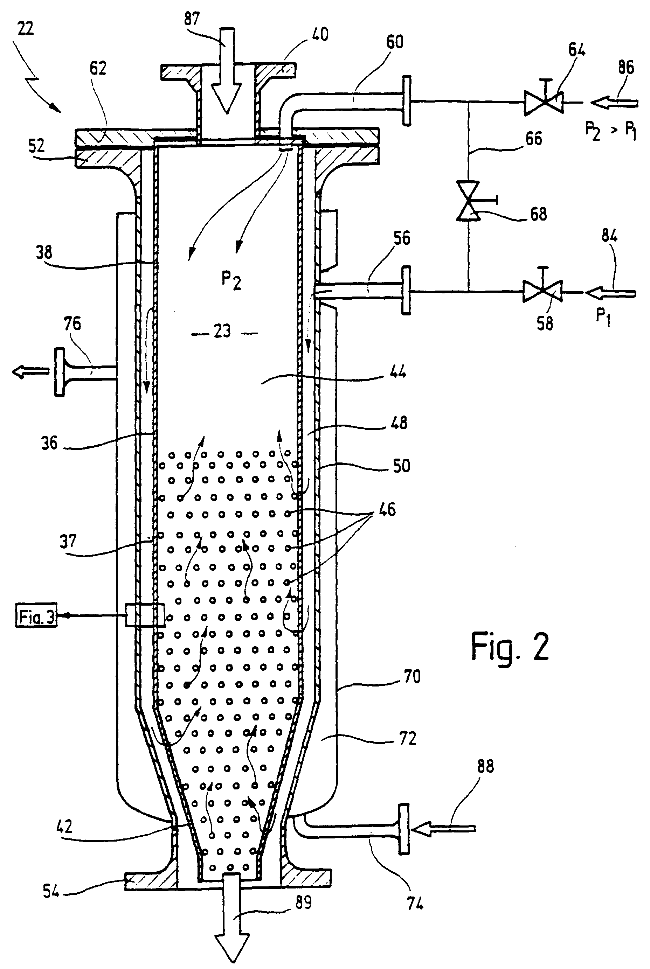

Der eigentliche Puffing-Reaktor 22 ist in Fig. 2 in vergrößertem Maßstabe dargestellt, wobei eine äußere isolierende Ummantelung, wie sie in Fig. 1 dargestellt ist, aus Übersichtsgründen weggelassen ist.

Unter Bezugnahme auf Fig. 2 ist zu entnehmen, daß der Puffing-Reaktor 22 ein inneres Behältnis 36 aufweist, das als metallischer Hohlzylinder 38 aufgebaut ist.

Am oberen Ende ist der Hohlzylinder 38 mit einem Stutzen 40 verbunden, der an das untere Ende der Dosierschleuse 20 angeflanscht ist.

Am unteren Ende ist der Hohlzylinder 38 mit einem konischen Abschnitt 42 versehen, dessen unteres Ende in dem Öffnungs` mechanismus 24, also in dem Kugelventil 26 mündet.

Der untere konische Abschnitt 42 sowie etwa die halbe Höhe des Hohlzylinders 38 sind mit zahlreichen kreisförmigen Öffnungen 46 versehen, die durch die Wand des Hohlzylinders 38 durchreichen.

Wie im Ausführungsbeispiel dargestellt sind die Öffnungen in einem regelmäßigen Lochblechmuster angeordnet, der Durchmesser der Öffnungen 46 beträgt jeweils etwa 1 mm.

Um das Behältnis 36 herum ist eine Kammer 48 angeordnet, die dadurch gebildet wird, daß konzentrisch um das Behältnis 36 ein Mantel 50 vorgesehen ist. Die Kammer 48 ist somit als Ringraum ausgebildet, der das Behältnis 36 umgibt.

Der Mantel 50 ist an seinem oberen Ende mit einem Flansch 52 versehen, der mit einer Deckplatte 62 verbunden ist, die zugleich einen oberen dichtenden Abschluß der Kammer 48 darstellt.

Der Mantel 50 ist am unteren Ende entsprechend mit einem Flansch 54 versehen, über den er an das obere Ende des Öffnungsmechanismus 24 angeflanscht ist, wodurch dann ein dichtender unterer Abschluß der Kammer 48 gebildet ist.

Der Mantel 50 ist mit einer Zuführleitung 56 versehen, die in die Kammer 48 mündet. Ein in die Kammer 48 über die Zuführleitung 56 eingeführtes Medium 84 tritt somit zunächst in die ringförmige Kammer 48 ein und kann dann anschließend über die zahlreichen Öffnungen 46 gleichmäßig verteilt in den Innenraum 23 des Behältnisses 36 eintreten.

Die Zuführleitung 56 ist über ein Ventil 58 mit einer hier nicht näher bezeichneten Quelle für das Medium 84 verbunden, das bspw. ein Wasserdampfmedium mit 180°C ist, das unter einem Druck p₁ von etwa 5 bis 12 bar steht.

An der Deckplatte 62 ist eine weitere Zuführleitung 60 angebracht, die durch die Deckplatte 62 hindurchreicht und am oberen Endbereich im Innenraum 23 des Behältnisses 36 mündet.

Die Zuführleitung 60 ist über ein Ventil 64 mit einer hier nicht näher dargestellten Quelle eines Mediums 86 verbunden. Dieses Medium kann ebenfalls ein Wasserdampfmedium sein, bspw. mit einer Temperatur von 230°C, wobei der Druck p₂ des Mediums 86 größer ist als der Druck p₁ des Mediums 84.

Der Druck p₂ des Mediums 86 liegt vorzugsweise im Bereich zwischen 15 und 25 bar.

Die Zuführleitungen 60 und 56 sind, in Einströmrichtung in Richtung Behältnis 36 gesehen, nach den Ventilen 58 und 64 über eine Verbindungsleitung 66 verbunden, wobei die Verbindungsleitung über ein Ventil 68 geöffnet bzw. gesperrt werden kann.

Um den Mantel 50 herum ist noch zusätzlich eine Mantelheizung 70 vorgesehen, wodurch um den Mantel 50 eine Heizkammer 72 gebildet ist. Die Heizkammer 72 ist mit einem Einlaß 74 bzw. einem Auslaß 76 versehen.

Über die Heizkammer 72 kann ein Heizmedium 88 geführt werden, das bspw. ebenfalls aus einem wasserdampfführenden, unter Druck stehenden Medium besteht, bspw. Wasserdampf mit 120° bis 150°C mit 5 bar.

Im dargestellten Ausführungsbeispiel ist vorgesehen, daß sämtliche zugeführte Medien Wasserdampfmedien, insbesondere Sattdampf, sind, die aus einer einzigen Quelle stammen und über entsprechende Druckreduzierventile auf den jeweils gewünschten Druck- bzw. die gewünschte Temperatur eingestellt werden.

Der erfindungsgemäße Puffing-Reaktor 22 arbeitet wie folgt.

Die Heizkammer 72 wird von dem Heizmedium 88 durchströmt.

Über den Stutzen 40 wird aus dem Vorratsbehälter 18 über die Dosierschleuse 20 so viel vorgewärmtes Produkt in den Innenraum 23 des Behältnisses 36 eingetragen, daß die Füllstandhöhe denjenigen Bereich des Hohlzylinders 38 übersteigt, in dem die Öffnungen 46 vorhanden sind. Das bedeutet, die Füllstandhöhe ist höher als die oberste Reihe der Öffnungen 46, jedoch ist der Innenraum 23 nicht vollständig gefüllt. Im Innenraum 23 herrscht Atmosphärendruck.

Bei geschlossenen Ventilen 64 und 58 und geschlossenem Kugelventil 26 wird über das geöffnete Ventil 58 das unter dem Druck p₁ bestehende Medium 84 in die Kammer 48 einströmen gelassen. Das Medium 84 dringt von der Außenseite 37 des Behältnisses 36 her durch die Öffnungen 46 in Richtung Innenraum 23 des Behältnisses 36. Dort trifft das Medium 84 auf das Produkt 32 und durchströmt dieses nach oben gerichtet in Richtung oberer Endbereich 44 des Behältnisses 36.

Dabei bilden sich unzählige kleine Strömungskanäle ausgehend von den Öffnungen 46, wie dies in der Schnittdarstellung durch die Strömungspfeile dargestellt ist. Bei diesem Durchströmen überträgt das Medium 84 Wärme auf das Produkt 32, aufgrund der gewählten Druck- und Temperaturbedingungen kann aber die im Innern des Produktes 32 vorhandene Feuchtigkeit nicht verdampfen.

Der Vorgang des Einströmens und des Durchströmens des Mediums 84 dauert etwa 30 bis 60 Sekunden.

Danach wird das Ventil 58 geschlossen, die Ventile 64 und 68 geöffnet, so daß nunmehr das Medium 86 einströmen kann. Das Medium 86 strömt über die Zuführleitung 60 in den verbleibenden Raum über dem Produkt im oberen Endbereich 44 des Hohlzylinders 38 ein, in dem sich der Druck p₁ aufgebaut hat und erhöht diesen Druck auf den Druck p₂. Gleichzeitig kann das Medium 86 über die Verbindungsleitung 66 und die Zuführleitung 56 in die Kammer 48 einströmen. Dieser Vorgang benötigt etwa 12 bis 15 Sekunden.

Das Medium 86 weist eine Temperatur von etwa 230°C und einen Druck p₂ von 15 bis 25 bar auf.

Dieser Zeitraum reicht aus, um im oberen produktfreien Bereich 44 des Behältnisses 36 einen Druck p₂ aufzubauen, ohne daß dieser sich wesentlich in das Produkt 32 hinein fortsetzt, da dieses Produkt einen großen Strömungswiderstand darstellt. In der Kammer 48 bildet sich der Druck p₂ aus. Die kleinen Öffnungen 46 stellen ebenfalls einen so großen Strömungswiderstand dar, daß sich auch von dieser Seite aus der Druck p₂ nicht in das Behältnis 36 hinein fortsetzt.

Nach diesem Zeitraum wird das Kugelventil 26 schlagartig geöffnet, Öffnungszeit etwa 100 bis 500 Millisekunden, wonach das Produkt explosionsartig aus dem Behältnis 36 über die gekrümmte Leitung 28 in die Expansionskammer 30, in der Atmosphärendruck herrscht, ausgestoßen wird.

Der im oberen produktfreien Bereich 44 des Behältnisses 36 zusätzlich erhöhte Druck p₂ dient dabei als eine Art zusätzlicher "Treibsatz" für das Produkt 32, der, in Austragrichtung 89 gesehen, "hinter" dem Produkt 32 vorhanden ist.

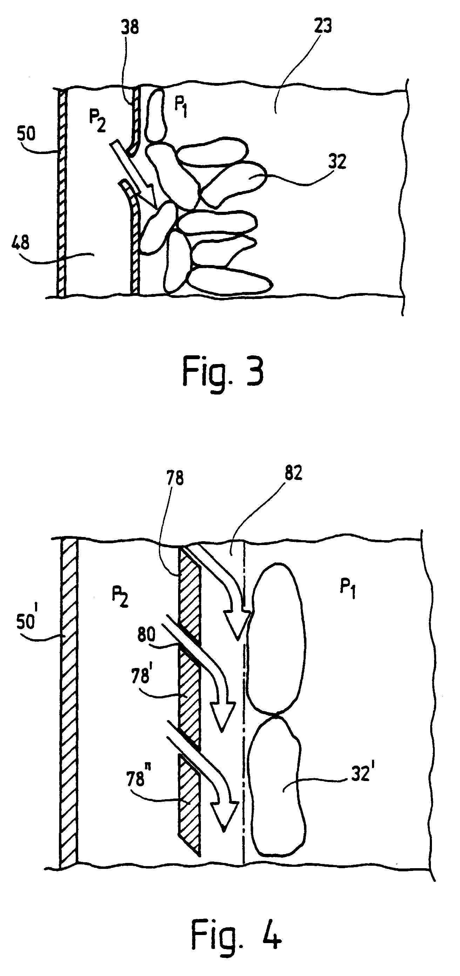

Beim Austragen des Produktes 32 findet nun, wie das insbesondere aus der vergrößerten Darstellung von Fig. 3 ersichtlich ist, ein Strömen aus der Kammer 48, in der der Druck p₂ vorherrscht, in Richtung des Innenraums 23 des Behältnisses 36, in dem der Druck p₁ abgebaut wird, statt, wodurch diese Strömung das Produkt 32 etwas von der Innenwand des Hohlzylinders 38 wegdrückt. Über die Vielzahl der Öffnungen 46 gesehen wird dadurch eine Art Luftmantel oder Luftkissen im unmittelbaren Nahbereich der Innenseite des Hohlzylinders 38 gebildet, das dem schnellen und reibungsfreien Austrag des Produktes 32 förderlich ist.

Durch entsprechende, nach unten, also in Austragsrichtung 89 gerichtete Stanzöffnungen 46 wird dies noch weiter begünstigt.

In Fig. 4 ist ein weiteres Ausführungsbeispiel dargestellt, bei dem dieses noch zielgerichteter bewerkstelligt wird.

Dabei ist der Hohlzylinder des Behältnisses aus übereinandergesetzten Ringelementen 78,78', 78'' zusammengesetzt, die an den Anlegestellen zwischen sich nach unten gerichtete ringförmige Kanäle 80 bilden. Solche Kanäle können auch durch Laserbrennen, Funkenerosion oder durch Bohren hergestellt werden. Diese Kanäle 80 erlauben in dem ersten Verfahrensschritt selbstverständlich das ebenfalls sehr gleichmäßig verteilte Eintreten des Mediums 84, leiten dann beim Austragen bei dem Druckausgleich von p₂ zu p₁ das Medium 86 so gezielt in den Innenraum, daß sich an der Innenseite der Ringelemente 78 eine Art Mediumpolsterschicht 82 ausbildet, über die das Produkt 32' gleitet.

Mit der beschriebenen Vorrichtung 10 können alle gängigen Getreideprodukte und Hülsenfrüchte jeweils unter individueller Anpassung der Druck- und Temperaturbedingungen verarbeitet werden, wobei ein sehr gleichmäßig geblähtes Puffprodukt erhalten wird.

Bei dem zuvor beschriebenen Ausführungsbeispiel wurde ein Behältnis herangezogen, das mit Öffnungen versehen war.

Es ist auch möglich, die Erfindung bei solchen Puffing-Reaktoren einzusetzen, die geschlossene Behältnisse haben, über die bspw. durch eine einzige Eintragsleitung das Medium am unteren Ende zugeführt wird, bspw. wie dies aus der EP 0 061 229 bekannt ist. Ein solches geschlossenes Behältnis wird dann nicht über seine gesamte Höhe mit dem Produkt befüllt, und es ist am oberen Ende die zusätzliche Zuführleitung für das druckhöhere Medium vorgesehen.

## Patentansprüche

1. Verfahren zum Puffen von Nahrungsmitteln, insbesondere von Getreide und Hülsenfrüchten, bei dem das Nahrungsmittel als körniges Produkt (32) aufbereitet wird, das Produkt (32) in ein geschlossenes, stehendes Behältnis (36) gegeben wird, im geschlossenen Behältnis (36) derart mit einem unter Druck (p₁) stehenden, wärmeführenden Medium (84) beaufschlagt wird, daß bei einem anschließenden Öffnen des Behältnisses (36) ein solch schlagartiger Druckabbau unter Austreiben des Produktes (32) aus dem Behältnis (36) stattfindet, daß das Produkt (32) aufgebläht wird, wobei nach einer gewissen Einströmzeit des Mediums (84) in das Behältnis (36) und kurz vor Öffnen des Behältnisses (36) noch mit einem zusätzlichen, höheren Druck (p₂) beaufschlagt wird, dadurch gekennzeichnet, daß das Produkt (32) in ein umfänglich mit zahlreichen Öffnungen (46, 80) versehenes Behältnis (36) eingebracht wird, daß ferner das Medium (84) über die Außenseite (37) verteilt an das Behältnis (36) herangeführt und über die zahlreichen Öffnungen (46, 80) in das Produkt (32) hinein und durch dieses gleichmäßig verteilt geführt wird, und daß ein produktfreier Bereich (44) im Behältnis (36), in Austragrichtung (89) des Produktes (32) gesehen, hinter dem Produkt (32), mit dem höheren Druck (p₂) beaufschlagt wird.

2. Verfahren nach Anspruch 1, dadurch gekennzeichnet, daß Teile des Mediums (84), nach Durchströmen des Produktes (32), in einen Bereich (44) des Behältnisses (36) gelangen, in dem dieses keine Öffnungen (46, 80) aufweist, wobei dieser Bereich (44), in Austragrichtung (89) des Produktes (32) gesehen, hinter dem Produkt (32) liegt.

3. Verfahren nach Anspruch 2, dadurch gekennzeichnet, daß auch die Außenseite (37) des Behältnisses (36) mit dem höheren Druck (p₂) beaufschlagt wird.

4. Verfahren nach einem der Ansprüche 1 bis 3, dadurch gekennzeichnet, daß das Behältnis (36) von der Außenseite her beheizt wird.

5. Vorrichtung zum Puffen von Nahrungsmitteln, insbesondere von Getreide und Hülsenfrüchten, mit einem stehenden Puffing-Reaktor (22), der ein verschließbares Behältnis (36) aufweist, in das das Nahrungsmittel als körniges Produkt (32) einbringbar ist, sowie mit einer Zuführleitung (56) zum Zuführen eines unter Druck (p₁) stehenden, wärmeführenden Mediums (84) in das Behältnis (36), sowie mit einem Öffnungsmechanismus (24) zum schlagartigen Öffnen des Behältnisses (36), dadurch gekennzeichnet, daß das Behältnis (36) umfänglich verteilt mit zahlreichen Öffnungen (46, 80) versehen ist, daß um die Außenseite (37) des Behältnisses (36) eine Kammer (48) vorgesehen ist, der das Medium (84) zugeführt wird und dieses aus der Kammer (48) über die zahlreichen Öffnungen (46) in das Behältnis (36) strömt, und wobei das Behältnis (36) am oberen Endbereich (44) keine Öffnungen (46, 80) aufweist, und daß in einem oberen Endbereich (44) des Behältnisses (36) eine Zuführleitung (60) mündet, über die ein Medium (86) höheren Druckes (p₂) als der des zugeführten Mediums (84) einspeisbar ist.

6. Vorrichtung nach Anspruch 5, dadurch gekennzeichnet, daß die Zuführleitung (60) über ein Ventil (68) mit der Kammer (48) verbindbar ist.

7. Vorrichtung nach Anspruch 5 oder 6, dadurch gekennzeichnet, daß die Außenseite der Kammer (48) mit einer Heizung (70) versehen ist.

8. Vorrichtung nach Anspruch 7, dadurch gekennzeichnet, daß die Heizung (70) als Heizkammer (72) ausgebildet ist, die um die Kammer (48) herum angeordnet ist, wobei durch die Heizkammer (72) ein Heizmedium (88) führbar ist.

9. Vorrichtung nach einem der Ansprüche 5 bis 8, dadurch gekennzeichnet, daß die Öffnungen (46) als nach außen gerichtete Stanzlöcher ausgebildet sind.

10. Vorrichtung nach einem der Ansprüche 5 bis 8, dadurch gekennzeichnet, daß die Öffnungen als Ringkanäle (80) ausgebildet sind, die zwischen aufeinandersitzenden Ringelementen (78, 78', 78'') ausgebildet sind.

11. Vorrichtung nach Anspruch 9 oder 10, dadurch gekennzeichnet, daß die Öffnungen (46, 80) in Austragsrichtung (89) geneigt ausgerichtet verlaufen.

## Claims

1. Method for puffing foodstuffs, especially cereals and pulse, wherein the foodstuff is processed to the state of a granular product (32), the product (32) is placed in a closed, upright vessel (36), is subjected in the closed vessel (36) to the action of a pressurized (p₁), heat-carrying agent (84) in a manner such that when subsequently the vessel (36) is opened, an abrupt pressure reduction occurs with the product (32) being expelled from the vessel (36), such that the product (32) is puffed out, and wherein, after a given time of inflow of the agent (84) into the vessel (36), and shortly before the vessel (36) is opened, an additional higher pressure (p₂) is applied, characterized in that the product (32) is introduced into a vessel (36) whose periphery is provided with a plurality of openings (46, 80), and in that further the agent (84) is applied, distributed over the outside (37) of the vessel (36) and flows through the plurality of openings (46, 80) into the product (32) and in uniform distribution through the latter, and in that the higher pressure (p₂) is applied to a product-free section (44) in the vessel (36), located behind the product (32), viewed in the direction of discharge (89) of the product.

2. Method according to claim 1, characterized in that parts of the medium (84), after they have flown through the product (32), get into a section (44) of the vessel (36) that does not contain any openings (46, 80), wherein said section (44) being arranged behind the product (32), viewed in the direction of discharge (89) of the product (32).

3. Method according to claim 2, characterized in that the higher pressure (p₂) is applied to the outside (37) of the vessel (36) as well.

4. Method according to any of claims 1 through 3, characterized in that the vessel (36) is heated from the outside.

5. Device for puffing foodstuffs, especially cereals and pulse, in an upright puffing reactor (22) comprising a vessel (36) that can be closed for receiving the foodstuff as a granular product (32), further comprising a supply line (56) for introducing a pressurized (p₁), heat-carrying agent (84) into the vessel (36), and an opening mechanism (24) for the abrupt opening of the vessel (36), characterized in that the vessel (36) is provided with a plurality of openings (46, 80) distributed over its periphery, that a chamber (48) is provided around the outside (37) of the vessel (36), to which chamber (48) the agent (84) is supplied, and that the agent (84) flows from the chamber (48) through the plurality of openings (46) into the vessel (36), the vessel (36) having no openings (46, 80) in its upper end section (44), and in that a supply line (60) through which an agent (86) can be introduced at a higher pressure (p₂) than that of the supplied agent (84), opens into an upper end section (44) of the vessel (36).

6. Device according to claim 5, characterized in that the supply line (60) can be connected with the chamber (48) via a valve (68).

7. Device according to claim 5 or 6, characterized in that the outside of the chamber (48) is provided with a heating (70).

8. Device according to claim 7, characterized in that the heating (70) is designed as a heating chamber (72) arranged around the chamber (48), and in that a heating agent (88) can be guided through the heating chamber (72).

9. Device according to any of claims 5 through 8, characterized in that the openings (46) are formed as outwardly directed punched holes.

10. Device according to any of claims 5 through 8, characterized in that the openings are designed as annular channels (80) formed between superimposed ring elements (78, 78', 78'').

11. Device according to claims 9 or 10, characterized in that the openings (46, 80) are inclined in the direction of discharge (89).

## Revendications

1. Procédé pour l'éclatement de produits alimentaires, notamment de céréales et de légumineuses, dans lequel le produit alimentaire est préparé sous la forme d'un produit granuleux (32), le produit (32) est introduit dans un récipient (36) vertical et fermé, dans le récipient (36) fermé il est soumis à un agent (84) sous pression (p₁) conduisant la chaleur, de manière que lors d'une ouverture suivante du récipient (36) il se produit une réduction si brusque de la pression avec expulsion du produit (32) du récipient (36), que le produit (32) est soufflé, après un certain temps d'arrivée de l'agent (84) dans le récipient (36) et juste avant l'ouverture du récipient (36), le produit (32) étant encore soumis à une pression supérieure (p₂) supplémentaire, caractérisé en ce que le produit (32) est introduit dans un récipient (36) pourvu périphériquement de nombreuses ouvertures (46, 80), en ce qu'en outre l'agent (84), réparti sur la face extérieure (37), est guidé vers le récipient (36) et est acheminé par les nombreuses ouvertures (46, 80) à l'intérieur du produit (32) et est réparti uniformément à travers celui-ci et en ce qu'une zone (44) exempte de produit du récipient (36), située derrière le produit (32), vue dans le sens d'extraction (89) du produit (32), est soumise à la pression supérieure (p₂).

2. Procédé selon la revendication 1, caractérisé en ce qu'après avoir traversé le produit (32), des parties de l'agent (84) parviennent dans une zone (44) du récipient (36) dans laquelle celui-ci ne présente aucune ouverture (46, 80), cette zone (44) se situant derrière le produit (32), vue dans le sens d'extraction (89) du produit (32).

3. Procédé selon la revendication 2, caractérisé en ce que la face extérieure (37) du récipient (36) est aussi soumise à la pression supérieure (p₂).

4. Procédé selon la revendication 1 à 3, caractérisé en ce que le récipient (36) est chauffé à partir de la face extérieure.

5. Dispositif pour l'éclatement de produits alimentaires, notamment de céréales et de légumineuses, comportant un réacteur d'éclatement (22) vertical, qui comporte un récipient (36) pouvant être fermé, dans lequel le produit alimentaire peut être introduit sous la forme d'un produit (32) granuleux, ainsi qu'Une conduite d'arrivée (56) pour l'alimentation du récipient (36) avec un agent (84) sous pression (p₁), conduisant la chaleur ainsi qu'un mécanisme d'ouverture (24) pour l'ouverture brusque du récipient (36), caractérisé en ce que le récipient (36) est pourvu de nombreuses ouvertures (46, 80) réparties périphériquement, en ce qu'autour de la face extérieure (37) du récipient (36) est prévue une chambre (48) à laquelle est envoyé l'agent (84) et ce dernier s'écoule depuis la chambre (48) par les nombreuses ouvertures (46) dans le récipient (36), et le récipient (36) ne présentant aucune ouverture (46, 80) dans sa zone terminale supérieure (44), et en ce que dans une zone terminale supérieure (44) du récipient (36) débouche une conduite d'arrivée (60) par laquelle peut être alimenté un agent (86) de pression (p₂) supérieure à celle de l'agent (84) alimenté.

6. Dispositif selon la revendication 5, caractérisé en ce que la conduite d'arrivée (60) peut être reliée à la chambre (48) par une soupape (68).

7. Dispositif selon la revendication 5 ou 6, caractérisé en ce que la face extérieure de la chambre (48) est pourvue d'un chauffage (70).

8. Dispositif selon la revendication 7, caractérisé en ce que le chauffage (70) est réalisé sous la forme d'une chambre de chauffage (72) qui est disposé autour de la chambre (48), un agent de chauffage (88) pouvant être acheminé à travers la chambre de chauffage (72).

9. Dispositif selon l'une des revendications 5 à 8, caractérisé en ce que les ouvertures (46) sont réalisées sous la forme de trous poinçonnés dirigés vers l'extérieur.

10. Dispositif selon l'une des revendications 5 à 8, caractérisé en ce que les ouvertures sont réalisées sous la forme de canaux annulaires (80) qui sont formés entre des éléments annulaires (78, 78', 78'') reposant les uns sur les autres.

11. Dispositif selon la revendication 9 ou 10, caractérisé en ce que les ouvertures (46, 80) s'étendent inclinées dans le sens d'extraction (89).
